# EUROPEAN PATENT APPLICATION

(11) **EP 4 699 687 A1**
(43) Date of publication of application: **25.02.2026**
(21) Application number: 23934039.1
(22) Date of filing: 19.04.2023
(51) Int. Cl.: B01D 63/00, B01D 63/08, B01D 69/06, B01D 46/10, C02F 1/44

(54) **FLAT MEMBRANE MODULE**

(71) Applicant: Sumitomo Electric Industries, Ltd., Osaka-shi, Osaka 541-0041 (JP)
(72) Inventor: MORITA, Toru, Osaka-shi, Osaka 541-0041 (JP); NONOMURA, Kazuya, Osaka-shi, Osaka 541-0041 (JP); MIYANAGA, Miki, Osaka-shi, Osaka 541-0041 (JP)
(74) Representative: Boult Wade Tennant LLP
(86) International application number: PCT/JP2023/015600
(87) International publication number: WO 2024/218893

(57) **Abstract**

A flat membrane module according to one aspect of the present disclosure is a flat membrane module that separates fine particles from a fluid that contains the fine particles, and the flat membrane module includes: an element stack having a plurality of flat membrane elements; and a housing having an internal space and an inflow hole. The flat membrane element includes a separation layer formed with pores, and a support layer adjacent to the separation layer. When the direction in which the plurality of flat membrane elements are stacked is defined as a first direction, the direction perpendicular to the first direction is defined as a second direction, and the direction perpendicular to the first direction and the second direction is defined as a third direction, the element stack extends in the second direction. The internal space extends in an axial direction of the housing, and the cross section of the internal space perpendicular to the axial direction is circular. When the element stack is accommodated in the internal space, the second direction and the axial direction of the housing are parallel to each other, and the inflow hole faces a plane perpendicular to the second direction or the third direction.

## Description

### TECHNICAL FIELD

The present disclosure relates to a flat membrane module.

### BACKGROUND ART

Conventionally, there is known a spiral module that includes a spiral membrane element which is wound around a central tube and a cylindrical housing that accommodates the spiral membrane element (see, for example, Japanese Patent No. 7200427).

### CITATION LIST

### PATENT LITERATURE

PTL 1: Japanese Patent No. 7200427

### SUMMARY OF INVENTION

A flat membrane module of the present disclosure is a flat membrane module that separates fine particles from the fluid that contains the fine particles, and includes an element stack and a housing. The element stack includes a plurality of flat membrane elements. The plurality of flat membrane elements are stacked in such a manner that an introduction gap is maintained therebetween to introduce the fluid that contains the fine particles. The housing includes an internal space and an inflow hole. The internal space can accommodate the element stack. The inflow hole introduces the fluid that contains fine particles from the outside into the internal space. The flat membrane element includes a separation layer and a support layer. The separation layer is formed with pores. The pores are configured to trap the fine particles contained in the fluid and allow the fluid to pass therethrough. The support layer is disposed adjacent to the separation layer. The support layer includes a flow channel. The flow channel allows a filtered fluid, which is a fluid that has passed through the pores of the separation layer, to pass therethrough. A direction in which the plurality of flat membrane elements are stacked is defined to as a first direction. A direction perpendicular to the first direction is defined as a second direction. A direction perpendicular to the first direction and the second direction is defined as a third direction. The element stack extends in the second direction. The inner space extends in an axial direction of the housing. The cross section of the internal space perpendicular to the axial direction is circular. When the element stack is accommodated in the internal space of the housing, the second direction of the element stack and the axial direction of the housing are parallel to each other. The inflow hole faces a plane perpendicular to the second direction or the third direction in the element stack.

### BRIEF DESCRIPTION OF DRAWINGS

[Fig. 1] Fig. 1 is a schematic perspective view illustrating a flat membrane module according to a first embodiment.
[Fig. 2] Fig. 2 is a cross-sectional view taken along line II-II of Fig. 1.
[Fig. 3] Fig. 3 is a cross-sectional view taken along line III-III of Fig. 2.
[Fig. 4] Fig. 4 is a schematic perspective view illustrating a flat membrane element.
[Fig. 5] Fig. 5 is a partially enlarged schematic cross-sectional view of a region V in Fig. 4.
[Fig. 6] Fig. 6 is a partially enlarged schematic sectional view illustrating a modification of the flat membrane element.
[Fig. 7] Fig. 7 is a partially enlarged schematic sectional view illustrating a modification of the flat membrane element.
[Fig. 8] Fig. 8 is a partially enlarged schematic sectional view illustrating a modification of the flat membrane element.
[Fig. 9] Fig. 9 is a schematic view illustrating a filtration device equipped with the flat membrane module according to the first embodiment.
[Fig. 10] Fig. 10 is a cross-sectional view illustrating a flat membrane module according to a second embodiment.
[Fig. 11] Fig. 11 is a cross-sectional view illustrating a flat membrane module according to a third embodiment.

### DETAILED DESCRIPTION

### [Problem to be Solved by the Present Disclosure]

In the conventional spiral module, since bending stress is applied to the membrane element due to its structure, there is a room for improvement in terms of increasing the service life of the membrane element and coping with high pressure.

The present disclosure has been made to solve the above-mentioned problem. More specifically, the present invention provides a flat membrane module that can be used without applying bending stress to a membrane element.

### [Advantageous Effect of the Present Disclosure]

According to the flat membrane module of the present disclosure, the flat membrane module can be used without applying bending stress to the membrane element.

### [Description of Embodiments]

First, embodiments of the present disclosure will be described.
(1) A flat membrane module of the present disclosure is a flat membrane module that separates fine particles from the fluid that contains the fine particles, and includes an element stack and a housing. The element stack includes a plurality of flat membrane elements. The plurality of flat membrane elements are stacked in such a manner that an introduction gap is maintained therebetween to introduce the fluid that contains the fine particles. The housing includes an internal space and an inflow hole. The internal space can accommodate the element stack. The inflow hole introduces the fluid that contains fine particles from the outside into the internal space. The flat membrane element includes a separation layer and a support layer. The separation layer is formed with pores. The pores are configured to trap the fine particles contained in the fluid and allow the fluid to pass therethrough. The support layer is disposed adjacent to the separation layer. The support layer includes a flow channel. The flow channel allows a filtered fluid, which is a fluid that has passed through the pores of the separation layer, to pass therethrough. A direction in which the plurality of flat membrane elements are stacked is defined to as a first direction. A direction perpendicular to the first direction is defined as a second direction. A direction perpendicular to the first direction and the second direction is defined as a third direction. The element stack extends in the second direction. The inner space extends in an axial direction of the housing. The cross section of the internal space perpendicular to the axial direction is circular. When the element stack is accommodated in the internal space of the housing, the second direction of the element stack and the axial direction of the housing are parallel to each other. The inflow hole faces a plane perpendicular to the second direction or the third direction in the element stack.
   According to the present disclosure, it is possible to provide a flat membrane module that can be used without applying bending stress to a membrane element.
(2) In the flat membrane module according to (1), the separation layer may include an inorganic material.
(3) In the flat membrane module according to (2), the inorganic material may be a ceramic material.
(4) In the flat membrane module according to (1) to (3), the flat membrane element may further include a buffer material disposed between the separation layer and the support layer.
(5) In the flat membrane module according to (1) to (4), the separation layer may include a first separation layer and a second separation layer. The support layer may be disposed between the first separation layer and the second separation layer.
(6) In the flat membrane module according to (1) to (5), the thickness of at least a portion of a peripheral edge of the plurality of flat membrane elements that faces the inflow hole of the housing in the first direction when the element stack is accommodated in the internal space of the housing may be smaller than the thickness of a central portion of the plurality of flat membrane elements.
(7) In the flat membrane module according to (6), the peripheral edge of the plurality of flat membrane elements may be formed with a thermal fusion member.
(8) In the flat membrane module according to (1) to (7), the element stack may include a spacer. The spacer is disposed between two flat membrane elements adjacent to each other among the plurality of flat membrane elements. The spacer may maintain the introduction gap and form a flow channel which allows the fluid that contains the fine particles to pass therethrough.
(9) The flat membrane module according to (1) to (8) may include a drift prevention member. The drift prevention member may be disposed in a gap between an inner wall of the internal space and the element stack accommodated in the internal space. The drift prevention member may prevent the fluid that contains the fine particles from passing through the gap between the inner wall and the element stack accommodated in the inner space.
(10) In the flat membrane module according to (1) to (9), the plurality of flat membrane elements may include a first flat membrane element and a second flat membrane element. In a cross-section perpendicular to the second direction, the first flat membrane element may be disclosed closest to the inner wall of the internal space in the first direction. The second flat membrane element may be disposed farther away from the inner wall of the internal space than the first flat membrane element in the first direction. A first width of the first flat membrane element in the third direction may be less than a second width of the second flat membrane element in the third direction.
(11) In the flat membrane module according to (1) to (10), the housing may include an outflow hole and a recovery hole. The fluid that contains the fine particles, which has been introduced into the introduction gap in the element stack accommodated in the internal space but has not passed through the inside of the flat membrane element, may be discharged from the internal space to the outside through the outflow hole. The filtered fluid may be discharged from the internal space to the outside through the recovery hole.
(12) In the flat membrane module according to (11), an inflow-outflow distance, which is a distance from the inflow hole to the outflow hole in the axial direction of the housing, may be 0.6 times or more and 1.0 times or less a length of the housing in the axial direction.
(13) In the flat membrane module according to (11) or (12), when the element stack is accommodated in the internal space of the housing, the inflow hole may face a plane perpendicular to the third direction in the element stack. The outflow hole may include a first outflow hole and a second outflow hole. The recovery hole may include a first recovery hole and a second recovery hole. The inflow hole may be disposed at a position between the first outflow hole and the second outflow hole in the axial direction of the housing. The first recovery hole may be disposed on the same side as the first outflow hole in the axial direction of the housing as viewed from the inflow hole. The second recovery hole may be disposed on the same side as the second outflow hole in the axial direction of the housing as viewed from the inflow hole. A first inflow-outflow distance, which is a distance from the inflow hole to the first outflow hole in the axial direction of the housing, may be smaller than a first inflow-recovery distance, which is a distance from the inflow hole to the first recovery hole in the axial direction of the housing. A second inflow-outflow distance, which is a distance from the inflow hole to the second outflow hole in the axial direction of the housing, may be smaller than a second inflow-recovery distance, which is a distance from the inflow hole to the second recovery hole in the axial direction of the housing.

### [Details of Embodiments]

The details of embodiments of the present disclosure will be described with reference to the drawings. In the following drawings, the same or corresponding components will be denoted by the same reference numerals, and the description thereof will not be repeated.

### (First Embodiment)

### <Configuration of Flat Membrane Module>

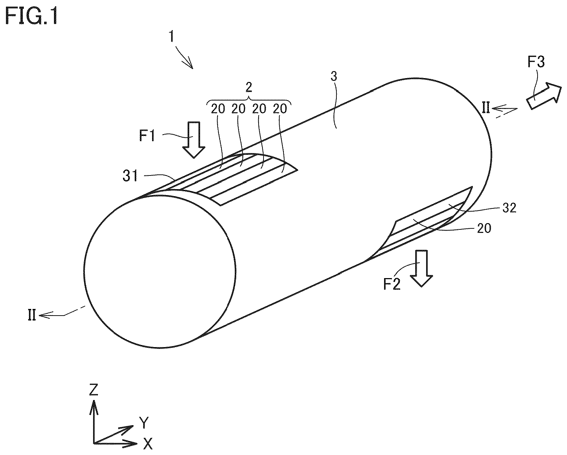

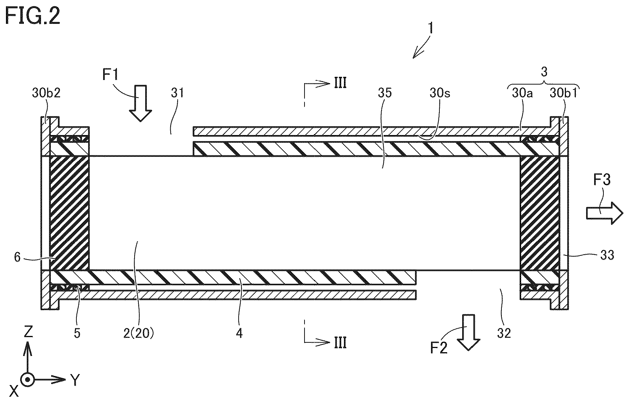

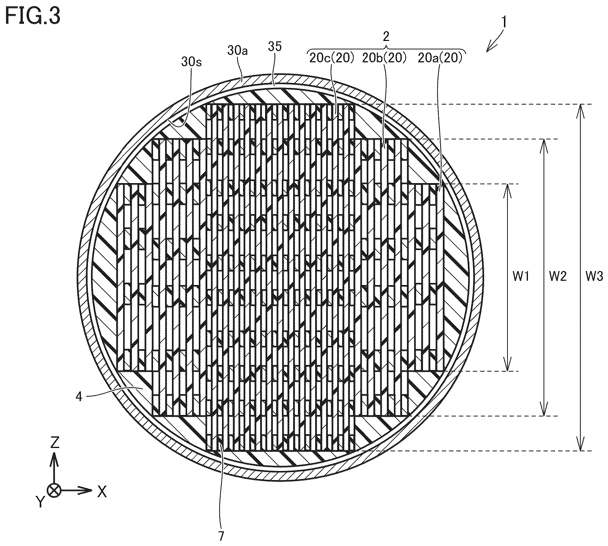

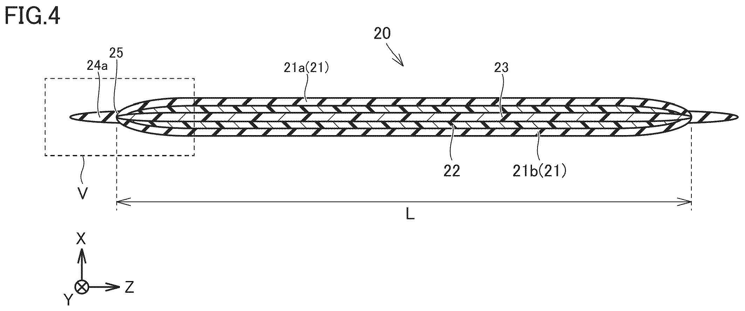

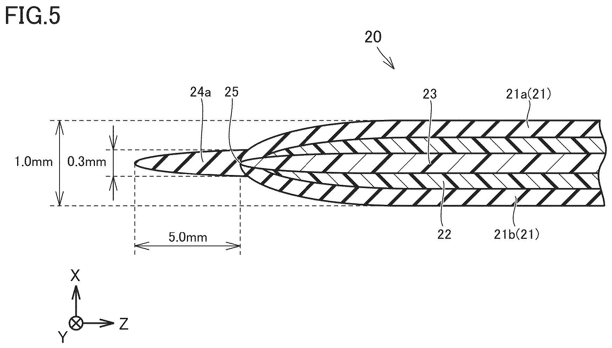

Fig. 1 is a schematic perspective view illustrating a flat membrane module 1 according to the present embodiment. Fig. 2 is a cross-sectional view taken along line II-II of Fig. 1. Fig. 3 is a cross-sectional view taken along line III-III of Fig. 2. Fig. 4 is a schematic cross-sectional view illustrating a flat membrane element 20. Fig. 5 is a partially enlarged schematic cross-sectional view of a region V in Fig. 4.

As illustrated in Figs. 1 to 5, flat membrane module 1 according to one aspect of the present disclosure is, for example, a separation membrane module that separates fine particles from a fluid that contains the fine particles (which will be referred to as "treating-target fluid F1" hereinafter). As to be described later, the fine particles contained in treating-target fluid F1 are trapped by a separation layer 21 of flat membrane element 20, whereby the fine particles are removed from treating-target fluid F1, resulting in a filtered fluid F3. Flat membrane module 1 may separate fine particles from treating-target fluid F1 by any separation method. The separation method of flat membrane module 1 may be, for example, a liquid filtration method in which treating-target fluid F1 and filtered fluid F3 are both liquids. The separation method of flat membrane module 1 may be, for example, a gas filtration method in which treating-target fluid F1 and filtered fluid F3 are both gases. The separation method of flat membrane module 1 may be a pervaporation method in which treating-target fluid F1 is a liquid and filtered fluid F3 is a gas. In the present specification, the fine particles to be separated may be any separation object to be separated from the treating-target fluid. Specifically, the fine particles to be separated may be inorganic particles whose shape does not change, but the shape of the fine particles may be any shape. For example, the fine particles may have a spherical shape, a polyhedral shape, a plate shape, a rod shape, or the like. The material of the fine particles is not limited to an inorganic material. The fine particles in the present specification also include an object made of an organic material that has a variable shape such as amoeba. In the present specification, the fine particles to be separated include not only solids but also liquids and gases. For example, when treating-target fluid F1 is seawater, the fine particles to be separated may be sodium ions or chloride ions. For example, when treating-target fluid F1 is methanol, the fine particles to be separated may be a macromolecule solute having a molecular weight of about 1350 such as vitamin B₁₂. For example, when treating-target fluid F1 is an organic solvent such as hexane, the fine particles to be separated may be soybean oil. For example, when treating-target fluid F1 is beer, the fine particles to be separated may be water molecules having a smaller molecular size, and ethyl alcohol may pass through the membrane. For example, when treating-target fluid F1 is air, the fine particles to be separated may be carbon dioxide.

As illustrated in Fig. 2, flat membrane module 1 mainly includes an element stack 2, a housing 3, and a drift prevention member 4. Element stack 2 includes a plurality of flat membrane elements 20. The plurality of flat membrane elements 20 are stacked in such a manner that an introduction gap is maintained therebetween to introduce the fluid that contains the fine particles. Specifically, element stack 2 includes a spacer 7 that maintains the introduction gap. Spacer 7 is disposed between two flat membrane elements 20 adjacent to each other among the plurality of flat membrane elements 20 to maintain the introduction gap. Spacer 7 may have a flow channel for treating-target fluid F1 to pass therethrough. For example, as illustrated in Fig. 3, a plurality of spacers 7 may be dispersed between two adjacent flat membrane elements 20 to form a flow channel for treating-target fluid F1 to pass therethrough in the introduction gap of element stack 2.

A direction in which the plurality of flat membrane elements 20 are stacked is defined as a first direction X. The width of the introduction gap in first direction X is, for example, 0.1 mm or more and 10 mm or less. The width of the introduction gap in first direction X should be large enough to allow the fluid that contains fine particles to be introduced. Therefore, the width of the introduction gap in first direction X may be changed according to the size of the fine particles to be separated. The width of the introduction gap in first direction X is defined by the width of spacer 7 in first direction X.

A direction perpendicular to first direction X is defined as a second direction Y. The direction in which element stack 2 extends is defined as second direction Y. In other words, element stack 2 has a shape extending in second direction Y. The planar shape of element stack 2 and flat membrane element 20 viewed from first direction X may be an arbitrary shape, and it may be, for example, a rectangular shape. A direction perpendicular to each of first direction X and second direction Y is defined as a third direction Z.

For example, as illustrated in Fig. 2, housing 3 includes an outer cylinder 30a and a pair of flanges 30b1 and 30b2. Outer cylinder 30a has a cylindrical shape. Outer cylinder 30a is sandwiched between the pair of flanges 30b1 and 30b2. Each of the pair of flanges 30b1 and 30b2 is connected to an end surface of outer cylinder 30a. In other words, an internal space 35 of housing 3 is a region surrounded by an inner wall 30s of outer cylinder 30a and the surfaces of the pair of flanges 30b1 and 30b2, each of which is connected to the end surface of outer cylinder 30a. Thus, internal space 35 is formed in housing 3 to accommodate element stack 2. The material of outer cylinder 30a and the pair of flanges 30b1 and 30b2 is, for example, a steel material such as stainless steel, titanium, or a high-strength material such as FRP (Fiber Reinforced Plastics). The nominal diameter of outer cylinder 30a and the pair of flanges 30b1 and 30b2 is, for example, 200A in JIS standards. Housing 3 may not include the pair of flanges 30b1 and 30b2, and for example, a clamp may be used to sandwich outer cylinder 30a.

In a cross section perpendicular to the axial direction of outer cylinder 30a, inner wall 30s of outer cylinder 30a has a circular shape. In other words, the cross section of internal space 35 perpendicular to the axial direction is circular, and internal space 35 extends in the axial direction of housing 3. In other words, internal space 35 has, for example, a cylindrical shape.

As illustrated in Fig. 2, housing 3 includes an inflow hole 31, an outflow hole 32, and a recovery hole 33. Inflow hole 31 introduces treating-target fluid F1 into internal space 35 from the outside of housing 3. Outflow hole 32 discharges treating-target fluid F2 from internal space 35 of housing 3 to the outside. Recovery hole 33 discharges filtered fluid F3 separated from treating-target fluid F1 by element stack 2 from internal space 35 of housing 3 to the outside. Specifically, inflow hole 31 and outflow hole 32 are formed on outer cylinder 30a so as to reach from an outer wall of outer cylinder 30a to inner wall 30s. Recovery hole 33 is formed on flange 30b1 so as to reach from the surface of flange 30b1 which is connected to the end surface of outer cylinder 30a to the opposite surface thereof. In other words, recovery hole 33 is formed in the axial direction. An example configuration of element stack 2 facing recovery hole 33 will be specifically described later.

In flat membrane element 20 according to the first embodiment, recovery hole 33 is formed only on flange 30b1 of the pair of flanges 30b1 and 30b2. As illustrated in Fig. 2, outflow hole 32 and inflow hole 31 are preferably disposed apart from each other in the axial direction of outer cylinder 30a. Specifically, outflow hole 32 is disposed in the vicinity of flange 30b1 where recovery hole 33 is formed. On the other hand, inflow hole 31 is disposed in the vicinity of flange 30b2 where recovery hole 33 is not formed. In a direction perpendicular to the central axis of internal space 35 of housing 3, inflow hole 31 is disposed on one side opposite to the side where outflow hole 32 is disposed when viewed from the central axis. From a different point of view, inflow hole 31 and outflow hole 32 are disposed at respective positions symmetrical about a middle point (for example, a central point of internal space 35) between inflow hole 31 and outflow hole 32 in the axial direction of housing 3. In addition, a recovery hole 33 may be formed on flange 30b2. Since recovery hole 33 is formed on flange 30b2, an arbitrary fluid can flow from recovery hole 33 on flange 30b2 into internal space 35 (more specifically, a flow channel through which filtered fluid F3 flows). For example, filtered fluid F3 can be quickly discharged to the outside of flat membrane element 20 by causing an inert gas or the like to flow from recovery hole 33 of flange 30b2 into the flow channel.

A distance between inflow hole 31 and outflow hole 32 in the axial direction of housing 3 is defined as an inflow-outflow distance. The inflow-outflow distance is, for example, a distance between a position on an inner peripheral wall of inflow hole 31 closest to outflow hole 32 and a position on an inner peripheral wall of outflow hole 32 closest to inflow hole 31 in the axial direction. The inflow-outflow distance is preferably 0.6 times or more and 1.0 times or less the length of housing 3 in the axial direction. The length of housing 3 in the axial direction is, for example, the distance between the pair of flanges 30b1 and 30b2 in the axial direction. A distance between outflow hole 32 and recovery hole 33 in the axial direction of housing 3 is defined as an outflow-recovery distance. A distance between inflow hole 31 and recovery hole 33 in the axial direction of housing 3 is defined as an inflow-recovery distance. When the inflow-outflow distance is 0.6 times the length of housing 3 in the axial direction, the outflow-recovery distance may be less than 0.2 times the length of housing 3 in the axial direction. When the outflow-recovery distance is small, it is possible to reduce treating-target fluid F1 retained in a region from outflow hole 32 to flange 30b1. As a result, the flow rate of filtered fluid F3 which is obtained by filtering treating-target fluid F1 with separation layer 21 of flat membrane element 20 is increased. From the same viewpoint, when the inflow-recovery distance is large, it is possible to reduce treating-target fluid F1 retained in a region from inflow hole 31 to flange 30b2. As a result, the flow rate of filtered fluid F3 which is obtained by filtering treating-target fluid F1 with separation layer 21 of flat membrane element 20 is increased. In other words, when outflow hole 32 is spaced apart from inflow hole 31 to some extent in the axial direction, the flow rate of filtered fluid F3 which is obtained by filtering treating-target fluid F1 with separation layer 21 of flat membrane element 20 is increased. As a result, the filtration efficiency is improved by increasing the inflow-outflow distance.

As illustrated in Fig. 2, inflow hole 31 and outflow hole 32 are formed on outer cylinder 30a in a direction perpendicular to the axial direction of housing 3. The direction in which inflow hole 31 is formed is the same as the direction in which outflow hole 32 is formed. In other words, the direction in which treating-target fluid F1 is introduced from the outside of housing 3 into internal space 35 through inflow hole 31 is the same as the direction in which treating-target fluid F2 is discharged from internal space 35 of housing 3 to the outside through outflow hole 32. Since recovery hole 33 is formed in the axial direction of housing 3, the direction in which filtered fluid F3 is discharged from internal space 35 of housing 3 to the outside is the same as the axial direction of housing 3.

When element stack 2 is accommodated in internal space 35 of housing 3, element stack 2 is accommodated in internal space 35 of housing 3 such that second direction Y, which is the extending direction of element stack 2, is the same as the axial direction of housing 3. In addition, since treating-target fluid F1 is introduced into the introduction gap of element stack 2, element stack 2 is accommodated in internal space 35 of housing 3 such that at least a partial surface of element stack 2 in third direction Z faces inflow hole 31 of housing 3. In other words, when element stack 2 is accommodated in internal space 35 of housing 3, second direction Y of element stack 2 and the axial direction of housing 3 are parallel to each other. In addition, inflow hole 31 faces a plane perpendicular to third direction Z in element stack 2 (a surface in third direction Z). As a result, element stack 2 is accommodated in housing 3 such that the direction (third direction Z in Fig. 2) perpendicular to first direction X in which the plurality of flat membrane elements 20 are stacked is the same as the direction in which treating-target fluid F1 is introduced. The surface of element stack 2 in the direction perpendicular to first direction X includes an end of the introduction gap formed between the plurality of flat membrane elements 20. Therefore, treating-target fluid F1 supplied from inflow hole 31 is introduced into the introduction gap of element stack 2.

In Fig. 2, inflow hole 31 may be formed on flange 30b2 where recovery hole 33 is not formed. In this case, the direction of inflow hole 31 formed on flange 30b2 (the inflow direction of treating-target fluid F1) is the same as the axial direction of housing 3. In other words, when element stack 2 is accommodated in internal space 35 of housing 3, inflow hole 31 may face a plane perpendicular to third direction Z in element stack 2. Also in this case, treating-target fluid F1 can be introduced into the introduction gap of element stack 2. An example configuration in the vicinity of inflow hole 31 will be described later.

As illustrated in Fig. 3, in a cross section perpendicular to the axial direction of housing 3, the plurality of flat membrane elements 20 may be stacked in such a manner that the width of each flat membrane element 20 in third direction Z becomes smaller as each flat membrane element 20 approaches inner wall 30s of outer cylinder 30a from the center of housing 3. Specifically, the plurality of flat membrane elements 20 include a plurality of first flat membrane elements 20a, a plurality of second flat membrane elements 20b, and a plurality of third flat membrane elements 20c. The plurality of first flat membrane elements 20a are disposed closest to inner wall 30s of internal space 35 in first direction X. The plurality of second flat membrane elements 20b are disposed farther away from inner wall 30s of internal space 35 than the plurality of first flat membrane elements 20a in first direction X. The plurality of third flat membrane elements 20c are disposed farther away from inner wall 30s of internal space 35 than the plurality of second flat membrane elements 20b in first direction X. In other words, the plurality of second flat membrane elements 20b are disposed between the plurality of first flat membrane elements 20a and the plurality of third flat membrane elements 20c in first direction X. A first width W1 of first flat membrane element 20a in third direction Z is smaller than a second width W2 of second flat membrane element 20b in third direction Z. Second width W2 of second flat membrane element 20b in third direction Z is smaller than a third width W3 of third flat membrane element 20c in third direction Z. Among the plurality of first flat membrane elements 20a, a first flat membrane element 20a closest to inner wall 30s of outer cylinder 30a in first direction X may be in contact with inner wall 30s. Specifically, among the plurality of first flat membrane elements 20a, both ends of first flat membrane element 20a in third direction Z closest to inner wall 30s of outer cylinder 30a in first direction X may be in contact with inner wall 30s. Among the plurality of second flat membrane elements 20b, both ends of second flat membrane element 20b in third direction Z closest to inner wall 30s of outer cylinder 30a in first direction X may be in contact with inner wall 30s. Among the plurality of third flat membrane elements 20c, both ends of third flat membrane element 20c in third direction Z closest to inner wall 30s of outer cylinder 30a in first direction X may or may not be in contact with inner wall 30s. As described above, since the plurality of flat membrane elements 20 are stacked in such a way that the width of flat membrane element 20 in third direction Z gradually decreases from the center of housing 3 toward inner wall 30s thereof, the filling rate of element stack 2 in internal space 35 is improved. As a result, the volume of element stack 2 can be increased as compared with the case where the cross-sectional shape of element stack 2 is square. Therefore, the effective membrane area of element stack 2 in housing 3 is increased, which improves the filtration efficiency of housing 3 per volume.

As described above, the filling rate of element stack 2 in internal space 35 may be improved, but even in this case, as illustrated in Figs. 2 and 3, a gap is still present between element stack 2 and inner wall 30s of housing 3. Therefore, flat membrane module 1 may be provided with a drift prevention member 4. Drift prevention member 4 is disposed in internal space 35 in the gap between inner wall 30s and element stack 2 accommodated in internal space 35. In this way, drift prevention member 4 prevents treating-target fluid F1 from passing through the gap between inner wall 30s of outer cylinder 30a and element stack 2 accommodated in internal space 35. As a result, the flow rate of treating-target fluid F1 passing through the inside of element stack 2 is increased, which improves the filtration efficiency of flat membrane module 1 configured to filter treating-target fluid F1. Any material may be used as the material of drift prevention member 4 as long as it can inhibit the flow of treating-target fluid F1. For example, a metal or a resin material such as FRP may be used as the material.

Flat membrane module 1 may include a pair of end sealing members 6 and an O-ring 5. As illustrated in Fig. 2, in flange 30b1 or 30b2, end sealing member 6 may be connected to the remaining surface of flange 30b1 or 30b2 connected to an end surface of outer cylinder 30a. In the vicinity of flange 30b1 or 30b2, end sealing member 6 is connected to an end surface of flat membrane element 20 so as to fill the introduction gap of element stack 2. End sealing member 6 is also connected to an end surface of drift prevention member 4 in second direction Y. End sealing member 6 may partially extend on the outer peripheral surface (the surface facing inner wall 30s of outer cylinder 30a) of drift prevention member 4. Thus, both ends of the plurality of flat membrane elements 20 and drift prevention member 4 in second direction Y are fixed by end sealing member 6. In the vicinity of flange 30b1 or 30b2, O-ring 5 is disposed between end sealing member 6 or drift prevention member 4 and inner wall 30s of outer cylinder 30a. O-ring 5 prevents treating-target fluid F1 from flowing toward flange 30b1 or 30b2 from an inner region as viewed from O-ring 5 in second direction Y. Thus, treating-target fluid F2 that has passed through the introduction gap is discharged from outflow hole 32 without leaking from internal space 35. At the end of flat membrane element 20 fixed by end sealing member 6 located in the vicinity of flange 30b1, an end of a flow channel of a support layer 23 which will be described later is exposed from end sealing member 6, and thereby, filtered fluid F3 can be discharged through recovery hole 33. When inflow hole 31 is formed on flange 30b2 as described above, end sealing member 6 located in the vicinity of flange 30b2 is formed with a through hole in communication with the introduction gap in element stack 2. Inflow hole 31 formed on flange 30b2 is communicated with the introduction gap of element stack 2 through the through hole.

The material of end sealing member 6 may be a resin material, for example, a thermosetting resin such as an epoxy resin, a urethane resin or an unsaturated polyester resin, a thermoplastic resin such as a fluorine resin or a polyolefin resin, or a rubber-based material such as fluorine rubber or silicon rubber. The material of end sealing member 6 is not limited to a resin material, and may be, for example, a metal material such as stainless steel, or a composite material obtained by combining a metal material and a resin material.

The material of O-ring 5 may be, for example, a rubber-based material such as NBR rubber, silicon rubber, fluorine-based silicon rubber, or Viton (registered trademark). The material of O-ring 5 is not limited to a rubber-based material, and may be, for example, a fluorine resin such as polytetrafluoroethylene (PTFE), or a composite material obtained by coating a rubber material with a fluorine resin.

The configuration of flat membrane element 20 will be described. As illustrated in Figs. 4 and 5, flat membrane element 20 mainly includes a separation layer 21, a buffer material 22, and a support layer 23. Flat membrane element 20 is formed by stacking separation layer 21, buffer material 22, and support layer 23. Separation layer 21 includes a first separation layer 21a and a second separation layer 21b. Support layer 23 is disposed between first separation layer 21a and second separation layer 21b. Buffer material 22 is disposed between separation layer 21 and support layer 23. Buffer material 22 may be omitted. Separation layer 21 is formed with pores configured to trap fine particles of treating-target fluid F1 and allow the fluid to pass therethrough. Support layer 23 includes a flow channel which allows a filtered fluid F3, which is a fluid that has passed through the pores of separation layer 21, to pass therethrough. Support layer 23 is, for example, a support base made of a porous material which is formed with pores that form a flow channel through which filtered fluid F3 flows. Filtered fluid F3 can pass through the flow channel formed by the pores of the support base. As illustrated in Figs. 4 and 5, flat membrane element 20 is formed by stacking buffer material 22 and separation layer 21 on both surfaces of the sheet-like support layer 23 to form a stack, and fixing at least a part of an outer periphery (peripheral edge) of the stack. Any method can be used to fix the outer periphery of the stack, and for example, the outer periphery may be fixed by thermal fusion. The planar shape of the stack is square, but may be any other shape. When separation layer 21 is a membrane made of a polymer material, the pores may be intermolecular gaps in the membrane constituting separation layer 21. For example, when the fine particles to be separated are CO₂ or the like, the pores (intermolecular gaps) in separation layer 21 may be set in such a manner that the fine particles are trapped and allowed to move in the pores by diffusion in accordance with the size of molecules constituting the fine particles, in other words, CO₂ dissolved in the polymer, or may be set in such a manner that the fine particles are trapped in the pores in accordance with the size of molecules constituting the fine particles.

Since the separation membrane module used in a spiral module has a cylindrical shape, bending stress is applied to the separation layer. In flat membrane module 1 according to the first embodiment, the plurality of flat membrane elements 20 are not processed to be bent into a cylindrical shape. Therefore, bending stress is not applied to the plurality of flat membrane elements 20 during the manufacturing of element stack 2. Also, during the use of flat membrane module 1, bending stress is not applied to separation layer 21 while element stack 2 is being accommodated in internal space 35. Accordingly, separation layer 21 may be made of a brittle material.

Separation layer 21 may include, for example, an inorganic material or an organic material. The inorganic material included in separation layer 21 may be, for example, a ceramic material. Separation layer 21 may include, for example, organic silica, zeolite, a metal oxide-based thin film material, a graphene-based nanosheet, an oxide-based nanosheet, or a carbon nanotube-based material. The organic material included in separation layer 21 may be, for example, a resin material. In general, separation layer 21 preferably has high permeability to fluid. Therefore, in order to ensure a high flow rate, separation layer 21 is preferably extremely thin. However, in this case, it is difficult to form separation layer 21 alone. Therefore, in order to reinforce separation layer 21, separation layer 21 may be a composite film that includes a separation function layer and a reinforcement layer. The material constituting the reinforcement layer which serves as a support layer is polytetrafluoroethylene (PTFE), polyethylene (PE), polypropylene (PP), polyvinylidene fluoride (PVDF), polysulfone (PSF), polyethersulfone (PES), polyketone (PK), polydimethylsiloxane (PDMS), polyvinyl alcohol (PVA), polyvinyl butyral (PVB), or the like.

Buffer material 22 is, for example, a nonwoven fabric. The fluid that has passed through the pores of separation layer 21 passes through buffer material 22 toward support layer 23. Even if separation layer 21 is formed as a composite film of the separation function layer and the reinforcement layer, the film strength may be insufficient. When the material constituting support layer 23 is, for example, polypropylene, polyester, or polytetrafluoroethylene, support layer 23 is flexible. Therefore, it is preferable to integrate separation layer 21 and buffer material 22 in advance by thermal fusion or the like. Thus, the rigidity of flat membrane element 20 can be improved by disposing support layer 23 adjacent to buffer material 22. In particular, when flat membrane module 1 is used under high-pressure conditions, if buffer material 22 is a nonwoven fabric, the occurrence of defects in separation layer 21 can be suppressed. The material constituting the nonwoven fabric may be polypropylene, polyester, polytetrafluoroethylene, polyphenylene sulfide, or the like.

The material constituting support layer 23 may be a resin material such as polytetrafluoroethylene, polyethylene, polypropylene, or the like. The material constituting support layer 23 may be a metal material in order to provide rigidity. Support layer 23 may be, for example, a stainless steel mesh or a plate material formed with flow channels by laser processing or the like.

The thickness of separation layer 21 in first direction X is, for example, 5 µm or more and 50 µm or less. The thickness of the separation function layer in first direction X is, for example, 10 nm or more and 10 µm or less. The thickness of support layer 23 in first direction X is, for example, 0.1 mm or more and 5 mm or less. As illustrated in Fig. 5, the thickness in first direction X of flat membrane element 20 which is formed by stacking separation layer 21, buffer material 22 and support layer 23 is, for example, 1 mm. The thickness of flat membrane element 20 in first direction X may be 0.5 mm or more and 2 mm or less. The lower limit thickness of flat membrane element 20 in first direction X may be 0.1 mm or 0.4 mm. The upper limit thickness of flat membrane element 20 in first direction X may be 5 mm or 10 mm. The length of flat membrane element 20 in second direction Y or in third direction Z may be appropriately determined according to the configuration of flat membrane module 1. The length of flat membrane element 20 in second direction Y may be, for example, 100 cm. The length of flat membrane element 20 in third direction Z may be, for example, 20 cm.

A peripheral edge 25 of flat membrane element 20 is formed with a thermal fusion member 24a. Separation layer 21 and support layer 23 are joined to each other at peripheral edge 25 of flat membrane element 20 by thermal fusion. In flat membrane element 20 illustrated in Figs. 4 and 5, thermal fusion member 24a is formed by joining separation layer 21, support layer 23 and buffer material 22 to each other by thermal fusion. Thermal fusion member 24a extends outward from an end of support layer 23 or the like in third direction Z. For example, the width of thermal fusion member 24a in third direction Z is, for example, 5 mm. The width of thermal fusion member 24a may be any value as long as it can be used to fix separation layer 21 and support layer 23.

The joining method by thermal fusion reduces the thickness of peripheral edge 25 of flat membrane element 20 in first direction X. For example, the thickness of peripheral edge 25 (thermal fusion member 24a) in first direction X is 0.3 mm. In other words, the thickness of peripheral edge 25 of flat membrane element 20 in first direction X is smaller than the thickness of any portion of flat membrane element 20 other than peripheral edge 25 in first direction X. In particular, it is preferable that the thickness of at least a portion of flat membrane element 20 (the thickness of thermal fusion member 24a) that faces inflow hole 31 of housing 3 in first direction X when element stack 2 is accommodated in internal space 35 of housing 3 is smaller than the thickness of a central portion of flat membrane element 20. Thus, the width of the introduction gap in the portion of flat membrane element 20 that faces inflow hole 31 of housing 3 becomes larger than the width of the introduction gap of flat membrane element 20 other than peripheral edge 25, and thereby treating-target fluid F1 that flows into internal space 35 from the outside of housing 3 can be easily introduced into the introduction gap. In addition, according to the joining method by thermal fusion, thermal fusion member 24a does not contain any extra material, and thereby is not affected by treating-target fluid F1 in terms of chemical resistance, which makes it possible to increase the types of treating-target fluid F1 that can be filtered.

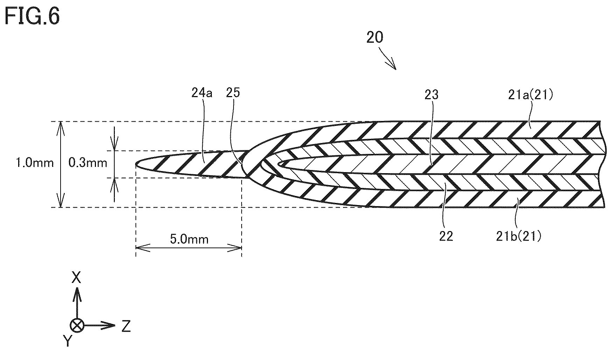

Figs. 6 to 8 are partially enlarged schematic cross-sectional views illustrating modifications of flat membrane element 20. Any joining method may be employed to form peripheral edge 25 of flat membrane element 20. The configuration of flat membrane element 20 illustrated in Figs. 6 to 8 is basically similar to that of flat membrane element 20 illustrated in Figs. 4 and 5, but is different from that of flat membrane element 20 illustrated in Figs. 4 and 5 in the following points. Specifically, in flat membrane element 20 illustrated in Fig. 6, first separation layer 21a and second separation layer 21b are thermally fused in such a manner that they are directly joined to each other. Support layer 23 does not extend up to peripheral edge 25 in third direction Z. In other words, thermal fusion member 24a is formed by thermally fusing first separation layer 21a and second separation layer 21b. Thermal fusion member 24a may be thermally fused to buffer material 22 which is preliminarily integrated with first separation layer 21a and second separation layer 21b by thermal fusion. First separation layer 21a and second separation layer 21b may be joined to each other by thermal fusion via a thermally fusible tape.

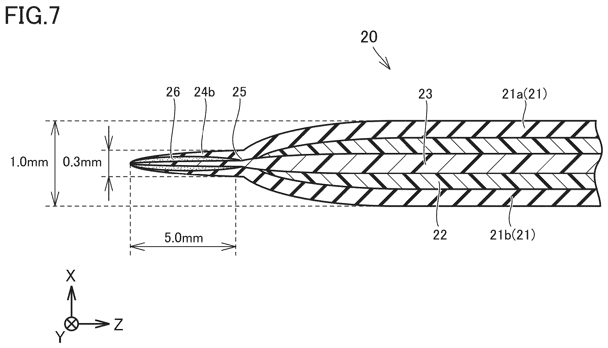

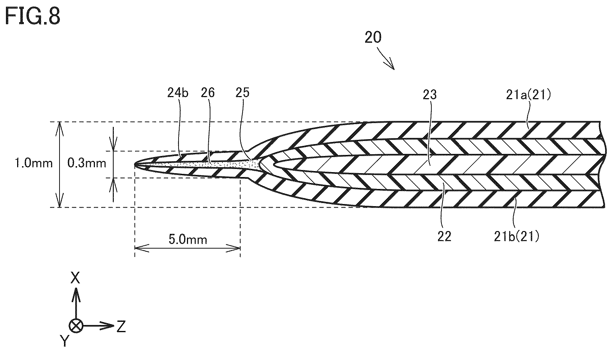

In flat membrane element 20 illustrated in Fig. 7, the peripheral edge of flat membrane element 20 is fixed using an adhesive instead of a joining method by thermal fusion. In other words, first separation layer 21a and second separation layer 21b may be joined to support layer 23 via an adhesive material 26. Specifically, peripheral edge 25 of flat membrane element 20 is formed with an adhesion member 24b. In adhesion member 24b, adhesive material 26 is disposed on a front surface and a rear surface of support layer 23. An outer peripheral portion of first separation layer 21a is fixed to the front surface of support layer 23 by adhesive material 26. An outer peripheral portion of second separation layer 21b is fixed to the rear surface of support layer 23 by adhesive material 26. As described above, when adhesive material 26 is used, the type of treating-target fluid F1 is likely to be restricted in terms of chemical resistance, but a material which is difficult to be thermally fused can be applied to separation layer 21 and support layer 23. In flat membrane element 20 illustrated in Fig. 8, first separation layer 21a and second separation layer 21b are joined to each other via adhesive material 26. In this case, support layer 23 does not extend up to adhesion member 24b. Buffer material 22 also does not extend up to adhesion member 24b. First separation layer 21a and second separation layer 21b may be joined to each other by adhesive material 26 with a thin plate (not shown) interposed therebetween. In other words, a thin plate may be disposed between first separation layer 21a and second separation layer 21b, and the thin plate may be joined to first separation layer 21a and second separation layer 21b by an adhesive material.

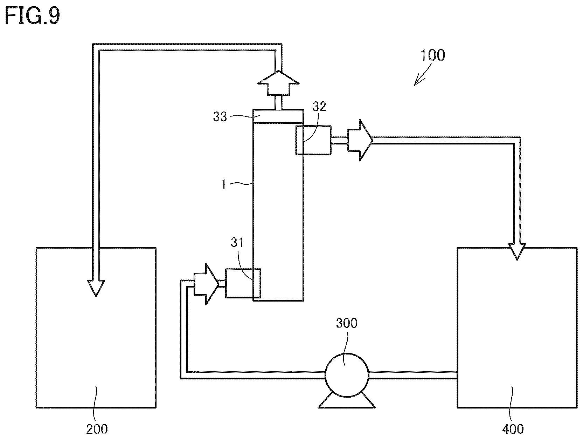

Fig. 9 is a schematic view illustrating a filtration device 100 equipped with flat membrane module 1 according to the first embodiment. Filtration device 100 is, for example, a filtration device 100 configured to filter liquids. Filtration device 100 according to the first embodiment mainly includes a flat membrane module 1, a raw water tank 400, a raw water supply pump 300, and a treated water tank 200. Raw water tank 400 is connected to inflow hole 31 of flat membrane module 1 via a pipe with raw water supply pump 300 disposed therebetween. Outflow hole 32 of flat membrane module 1 is connected to raw water tank 400 via a pipe. Recovery hole 33 of flat membrane module 1 is connected to treated water tank 200 via a pipe. Treating-target fluid F1 is stored in raw water tank 400. Treating-target fluid F1 stored in raw water tank 400 is pumped to flat membrane module 1 by raw water supply pump 300. Treating-target fluid F1 supplied from raw water tank 400 is introduced into flat membrane module 1 through inflow hole 31. Flat membrane module 1 separates treating-target fluid F1 supplied from raw water tank 400 into a filtered fluid F3 and a treating-target fluid F2 discharged without being filtered. Filtered fluid F3 is discharged from recovery hole 33. Filtered fluid F3 discharged from recovery hole 33 is transported to treated water tank 200. On the other hand, treating-target fluid F2 discharged without being filtered is discharged from outflow hole 32. Treating-target fluid F2 discharged from outflow hole 32 is transported to raw water tank 400 again and stored therein. Treating-target fluid F2 transported to raw water tank 400 is combined with treating-target fluid F1 stored in raw water tank 400, and is introduced into flat membrane module 1 again.

As illustrated in Fig. 1 to Fig. 3, flat membrane module 1 according to the first embodiment is characterized in that an element stack 2 that includes a plurality of flat membrane elements 20 is accommodated in an internal space 35 of a cylindrical housing 3. Since element stack 2 is formed by stacking a plurality of flat membrane elements 20, bending stress is not applied to flat membrane element 20 during manufacturing and use. Therefore, the service life of flat membrane module 1 is improved. Housing 3 has a cylindrical shape instead of a rectangular parallelepiped shape. Therefore, the internal pressure applied to inner wall 30s having a circular cross-sectional shape is uniform, and thereby the pressure resistance is improved. Therefore, flat membrane module 1 can be used even under high-pressure conditions. When element stack 2 is accommodated in internal space 35 of housing 3, since inflow hole 31 is disposed to face a plane perpendicular to the direction in which the plurality of flat membrane elements 20 are stacked, treating-target fluid F1 can be easily introduced into the introduction gap of element stack 2.

### <Effects>

Flat membrane module 1 of the present disclosure is a flat membrane module 1 that separates fine particles from the fluid that contains the fine particles. Flat membrane module 1 includes an element stack 2 and a housing 3. Element stack 2 includes a plurality of flat membrane elements 20. The plurality of flat membrane elements 20 are stacked in such a manner that an introduction gap is maintained therebetween to introduce the fluid that contains the fine particles (treating-target fluid F1). Housing 3 includes an internal space 35 and an inflow hole 31. Internal space 35 can accommodate element stack 2. Inflow hole 31 introduces the fluid that contains fine particles into internal space 35 from the outside. Flat membrane element 20 includes a separation layer 21 and a support layer 23. Separation layer 21 is formed with pores configured to trap the fine particles contained in the fluid and allow the fluid to pass therethrough. Support layer 23 is disposed adjacent to separation layer 21. Support layer 23 includes a flow channel that allows a filtered fluid F3, which is a fluid that has passed through the pores of separation layer 21, to pass therethrough. A direction in which the plurality of flat membrane elements 20 are stacked is defined as a first direction X. A direction perpendicular to first direction X is defined as a second direction Y. A direction perpendicular to first direction X and second direction Y is defined as a third direction Z. Element stack 2 extends in second direction Y. Internal space 35 extends in the axial direction of housing 3. The cross section of internal space 35 perpendicular to the axial direction is circular. When element stack 2 is accommodated in internal space 35 of housing 3, second direction Y of element stack 2 and the axial direction of housing 3 are parallel to each other. Inflow hole 31 faces a plane perpendicular to second direction Y or third direction Z in element stack 2.

Since element stack 2 is formed by stacking the plurality of flat membrane elements 20, bending stress is not applied to the flat membrane elements 20. Therefore, the service life of flat membrane module 1 is improved. Housing 3 has a cylindrical shape instead of a rectangular parallelepiped shape. Therefore, the internal pressure applied to the circular inner wall 30s is uniform, and thereby the pressure resistance is improved. Therefore, flat membrane module 1 can be used even under high-pressure conditions. In addition, since housing 3 is cylindrical and does not require a large number of reinforcing members as compared with a rectangular housing, the manufacturing cost can be reduced. In addition, when element stack 2 is accommodated in internal space 35 of housing 3, since inflow hole 31 is disposed to face a plane perpendicular to a direction (second direction Y or third direction Z) perpendicular to a direction (first direction X) in which the plurality of flat membrane elements 20 are stacked, treating-target fluid F1 can be easily introduced into the introduction gap of element stack 2.

In flat membrane module 1, separation layer 21 may include an inorganic material. In other words, an inorganic material may be used as the material of separation layer 21. In this case, even when treating-target fluid F1 contains a chemical or the like, since an inorganic material having resistance to the chemical can be used, the degree of freedom in selecting the material of separation layer 21 can be increased.

In flat membrane module 1, the inorganic material may be a ceramic material. In other words, separation layer 21 may include a ceramic material.

In flat membrane module 1, flat membrane element 20 includes a buffer material 22 disposed between separation layer 21 and support layer 23. When the material of support layer 23 is flexible, for example, the material may be PTFE. In this case, the rigidity of flat membrane element 20 can be improved by disposing buffer material 22 adjacent to support layer 23. In particular, when flat membrane module 1 is used under high-pressure conditions, the rigidity of flat membrane element 20 may be increased and the deformation thereof may be suppressed by using a nonwoven fabric as buffer material 22. As a result, the occurrence of defects in separation layer 21 caused by the deformation can be suppressed.

In flat membrane module 1, separation layer 21 may include a first separation layer 21a and a second separation layer 21b. Support layer 23 may be disposed between first separation layer 21a and second separation layer 21b. Thus, the flow rate of treating-target fluid F1 passing through separation layer 21 is increased, which improves the filtration efficiency.

In flat membrane module 1, the thickness of at least a portion of peripheral edge 25 of the plurality of flat membrane elements 20 that faces inflow hole 31 of housing 3 in first direction X when element stack 2 is accommodated in internal space 35 of housing 3 may be smaller than the thickness of a central portion of flat membrane element 20. Thus, the width of the introduction gap in the portion of flat membrane element 20 that faces inflow hole 31 of housing 3 becomes larger than the width of the introduction gap of flat membrane element 20 other than peripheral edge 25, and thereby treating-target fluid F1 can be easily introduced from the outside of housing 3 into internal space 35.

In flat membrane module 1, peripheral edge 25 of the plurality of flat membrane elements 20 may be formed with a thermal fusion member 24a. Since first separation layer 21a, second separation layer 21b and support layer 23 are joined to each other by thermal fusion without using any extra material, and thereby is not affected by treating-target fluid F1 in terms of chemical resistance.

In flat membrane module 1, element stack 2 may include a spacer 7 that forms a flow channel which allows a fluid that contains fine particles to pass therethrough. Spacer 7 may be disposed between two adjacent flat membrane elements 20 among the plurality of flat membrane elements 20. Spacer 7 may maintain the introduction gap. Thus, a flow channel which allows treating-target fluid F1 to pass therethrough can be formed in element stack 2.

Flat membrane module 1 may include a drift prevention member 4 that prevents the fluid that contains the fine particles from passing through the gap between inner wall 30s of internal space 35 and element stack 2 accommodated in internal space 35. Drift prevention member 4 may be disposed in the gap between inner wall 30s of internal space 35 and element stack 2 accommodated in internal space 35. In this way, the flow rate of treating-target fluid F1 passing through separation layer 21 of flat membrane element 20 is increased. As a result, the filtration efficiency is improved.

In flat membrane module 1, the plurality of flat membrane elements 20 may include a first flat membrane element 20a and a second flat membrane element 20b. In a cross section perpendicular to second direction Y, first flat membrane element 20a may be closest to inner wall 30s of internal space 35 in first direction X. Second flat membrane element 20b may be disposed farther away from inner wall 30s of internal space 35 than first flat membrane element 20a in first direction X. First width W1 of first flat membrane element 20a in third direction Z may be smaller than second width W2 of second flat membrane element 20b in third direction Z. Thus, the gap between housing 3 and element stack 2 can be reduced. As a result, the volume of element stack 2 in housing 3 can be increased as compared with the case where the cross-sectional shape of element stack 2 is square. Therefore, the flow rate of treating-target fluid F1 passing through the inside of element stack 2 is increased, which improves the filtration efficiency of flat membrane module 1 configured to filter treating-target fluid F1.

In flat membrane module 1, housing 3 may include an outflow hole 32 and a recovery hole 33. The fluid that contains fine particles, which has been introduced into the introduction gap in element stack 2 accommodated in internal space 35 but has not passed through the inside of flat membrane element 20, is discharged from internal space 35 to the outside through outflow hole 32. Filtered fluid F3 separated from the fluid that contains fine particles is discharged from internal space 35 to the outside through recovery hole 33. Thus, a part of treating-target fluid F1 entering from inflow hole 31 passes through the inside of element stack 2 and is discharged from recovery hole 33 to the outside as filtered fluid F3. The remainder of treating-target fluid F1 entering from inflow hole 31 is discharged from outflow hole 32 to the outside as treating-target fluid F2 containing fine particles that have not passed through the inside of flat membrane element 20.

In flat membrane module 1, an inflow-outflow distance, which is a distance between inflow hole 31 and outflow hole 32 in the axial direction of housing 3, may be 0.6 times or more and 1.0 times or less the length of housing 3 in the axial direction.

Thus, the region that retains treating-target fluid F1 is reduced. In other words, since outflow hole 32 is separated from inflow hole 31 in the axial direction, the amount of treating-target fluid F1 that passes through separation layer 21 of the plurality of flat membrane elements 20 before treating-target fluid F2 is discharged from outflow hole 32 can be increased. Therefore, the flow rate of filtered fluid F3 separated by separation layer 21 is increased. As a result, the filtration efficiency can be improved by increasing the inflow-outflow distance.

### (Second Embodiment)

### <Configuration of Flat Membrane Module>

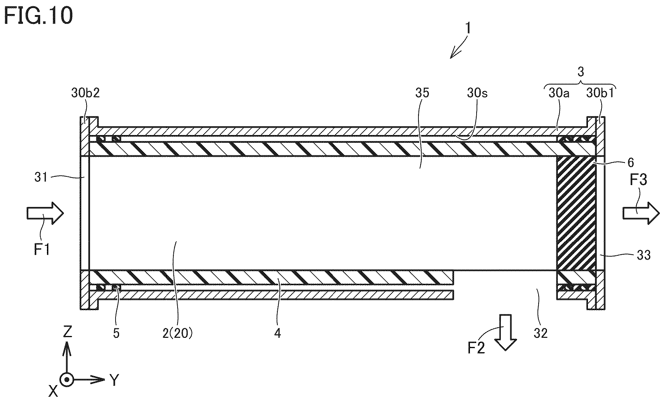

Fig. 10 is a cross-sectional view illustrating a flat membrane module 1 according to a second embodiment. Fig. 10 corresponds to Fig. 2. The configuration of flat membrane module 1 illustrated in Fig. 10 is basically the same as that of flat membrane module 1 illustrated in Figs. 1 to 5, but is different in that inflow hole 31 is formed on flange 30b2. Specifically, inflow hole 31 is not formed on outer cylinder 30a of housing 3, and inflow hole 31 is formed on flange 30b2. Thus, the direction in which inflow hole 31 is formed is parallel to the axial direction of flange 30b2. In addition, end sealing member 6 is not formed in the vicinity of flange 30b2 in which inflow hole 31 is formed so that treating-target fluid F1 can be introduced from the outside of housing 3 into internal space 35. Thus, the end of the introduction gap in element stack 2 faces inflow hole 31, and thereby treating-target fluid F1 entering from inflow hole 31 can be easily introduced into the introduction gap of element stack 2.

In a cross section perpendicular to the axial direction of housing 3, the inner peripheral width of inflow hole 31 is the same as the outer peripheral width of element stack 2. Thus, treating-target fluid F1 can be uniformly introduced into the introduction gaps of element stack 2 in the cross section perpendicular to the axial direction of housing 3. According to flat membrane module 1 having such a configuration, the same effects as those of flat membrane module 1 illustrated in Figs. 1 to 5 can be obtained.

### (Third Embodiment)

### <Configuration of Flat Membrane Module>

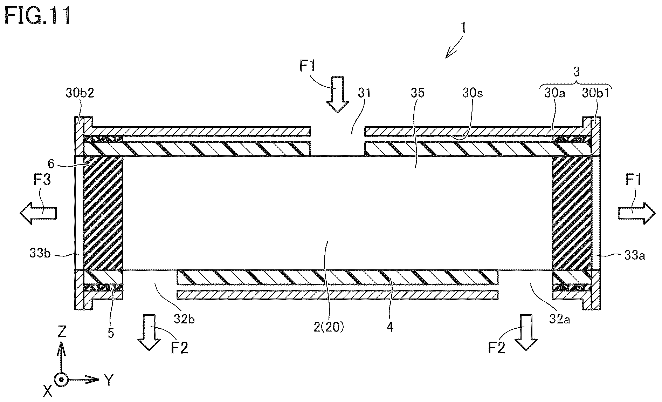

Fig. 11 is a cross-sectional view illustrating a flat membrane module 1 according to a third embodiment. Fig. 11 corresponds to Fig. 2. The configuration of flat membrane module 1 illustrated in Fig. 11 is basically the same as flat membrane module 1 illustrated in Figs. 1 to 5, but is different from the flat membrane module illustrated in Figs. 1 to 5 in the configuration of inflow hole 31, outflow hole 32 and recovery hole 33. Specifically, in flat membrane module 1 illustrated in Fig. 11, a first outflow hole 32a and a second outflow hole 32b are formed as the outflow hole. A first recovery hole 33a and a second recovery hole 33b are formed as the recovery hole. Recovery hole 33 is formed on each of the pair of flanges 30b1 and 30b2. In other words, first recovery hole 33a and second recovery hole 33b are formed in the same direction (the axial direction of housing 3). The structure of element stack 2 in the vicinity of flange 30b2 is the same as the structure of element stack 2 in the vicinity of flange 30b1. In other words, at the end of flat membrane element 20 fixed by end sealing member 6 located in the vicinity of flange 30b2, the end of the flow channel of support layer 23 (see Fig. 4) is exposed from end sealing member 6, and filtered fluid F3 can be discharged from second recovery hole 33b.

Inflow hole 31 is disposed at a position between first outflow hole 32a and second outflow hole 32b in the axial direction of housing 3. Inflow hole 31 is disposed at a central portion in the axial direction of housing 3. First recovery hole 33a is disposed on the same side as first outflow hole 32a in the axial direction of housing 3 as viewed from inflow hole 31. Second recovery hole 33b is disposed on the same side as second outflow hole 32b in the axial direction of housing 3 as viewed from inflow hole 31. A distance between inflow hole 31 and first outflow hole 32a in the axial direction of housing 3 is defined as a first inflow-outflow distance. The first inflow-outflow distance is, for example, a distance in the axial direction between a position on the inner peripheral wall of inflow hole 31 closest to first outflow hole 32a and a position on the inner peripheral wall of first outflow hole 32a closest to inflow hole 31. A distance from inflow hole 31 to first recovery hole 33a in the axial direction of housing 3 is defined as a first inflow-recovery distance. The first inflow-recovery distance is, for example, a distance in the axial direction between a position on the inner peripheral wall of inflow hole 31 closest to first recovery hole 33a and a position on the inner peripheral wall of first recovery hole 33a closest to inflow hole 31. The first inflow-outflow distance is smaller than the first inflow-recovery distance. A distance between inflow hole 31 and second outflow hole 32b in the axial direction of housing 3 is defined as a second inflow-outflow distance. The second inflow-outflow distance is, for example, a distance in the axial direction between a position on the inner peripheral wall of inflow hole 31 closest to second outflow hole 32b and a position on the inner peripheral wall of second outflow hole 32b closest to inflow hole 31. A distance from inflow hole 31 to second recovery hole 33b in the axial direction of housing 3 is defined as a second inflow-recovery distance. The second inflow-recovery distance is, for example, a distance in the axial direction between a position on the inner peripheral wall of inflow hole 31 closest to second recovery hole 33b and a position on the inner peripheral wall of second recovery hole 33b closest to inflow hole 31. The second inflow-outflow distance is smaller than the second inflow-recovery distance.

Thus, treating-target fluid F1 supplied to flat membrane module 1 from inflow hole 31 is filtered by element stack 2, and filtered fluid F3 is recovered from first recovery hole 33a and second recovery hole 33b. Therefore, even when the flow rate of treating-target fluid F1 is large, treating-target fluid F1 can be efficiently filtered.

### <Effects>

In flat membrane module 1, when element stack 2 is accommodated in internal space 35 of housing 3, inflow hole 31 may face a plane perpendicular to third direction Z in element stack 2. Outflow hole 32 may include a first outflow hole 32a and a second outflow hole 32b. Recovery hole 33 may include a first recovery hole 33a and a second recovery hole 33b. Inflow hole 31 may be disposed at a position between first outflow hole 32a and second outflow hole 32b in the axial direction of housing 3. First recovery hole 33a may be disposed on the same side as first outflow hole 32a in the axial direction of housing 3 as viewed from inflow hole 31. Second recovery hole 33b may be disposed on the same side as second outflow hole 32b in the axial direction of housing 3 as viewed from inflow hole 31. The first inflow-outflow distance, which is the distance from inflow hole 31 to first outflow hole 32a in the axial direction of housing 3, may be smaller than the first inflow-recovery distance, which is the distance from inflow hole 31 to first recovery hole 33a in the axial direction of housing 3. The second inflow-outflow distance, which is the distance from inflow hole 31 to second outflow hole 32b in the axial direction of housing 3, may be smaller than the second inflow-recovery distance, which is the distance from inflow hole 31 to second recovery hole 33b in the axial direction of housing 3.

Therefore, even when the flow rate of treating-target fluid F1 is large, treating-target fluid F1 can be efficiently filtered.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in meaning and scope to the claims.

### REFERENCE SIGNS LIST

1: flat membrane module; 2: element stack; 3: housing; 4: drift prevention member; 5: O-ring; 6: end sealing member; 7: spacer; 20: flat membrane element; 20a: first flat membrane element; 20b: second flat membrane element; 20c: third flat membrane element; 21: separation layer; 21a: first separation layer; 21b: second separation layer; 22: buffer material; 23: support layer; 24a: thermal fusion member; 24b: adhesive member; 25: peripheral edge; 26: adhesive material; 30a: external cylinder, 30b 1, 30b2, 30b2: flange; 30s: inner wall; 31: inflow hole; 32: outflow hole; 32a: first outflow hole; 32b: second outflow hole; 33: recovery holes; 33a: first recovery hole; 33b: second recovery hole; 35: internal space; 100: filtration device; 200: treated water tank; 300: raw water supply pump; 400: raw water tank; F1, F2: treating-target fluid; F3: filtered fluid; W1: first width; W2: second width; W3: third width; X: first direction; Y: second direction; Z: third direction.

## Claims

1. A flat membrane module that separates fine particles from a fluid that contains the fine particles, the flat membrane module comprising:
an element stack that includes a plurality of flat membrane elements stacked in such a manner that an introduction gap is maintained therebetween to introduce the fluid that contains the fine particles;
a housing that includes an internal space to accommodate the element stack and an inflow hole to introduce the fluid that contains the fine particles from the outside into the internal space,
the flat membrane element includes a separation layer which is formed with pores configured to trap the fine particles contained in the fluid and allow the fluid to pass therethrough, and a support layer which is disposed adjacent to the separation layer and includes a flow channel which allows a filtered fluid, which is the fluid that has passed through the pores of the separation layer, to pass therethrough,
when a direction in which the plurality of flat membrane elements are stacked is defined as a first direction, a direction perpendicular to the first direction is defined as a second direction, and a direction perpendicular to the first direction and the second direction is defined as a third direction, the element stack extends in the second direction,
the internal space extends in an axial direction of the housing, and a cross section of the internal space perpendicular to the axial direction is circular, and
when the element stack is accommodated in the internal space of the housing, the second direction of the element stack and the axial direction of the housing are parallel to each other, and the inflow hole faces a plane perpendicular to the second direction or the third direction in the element stack.

2. The flat membrane module according to claim 1, wherein
the separation layer includes an inorganic material.

3. The flat membrane module according to claim 2, wherein
the inorganic material is a ceramic material.

4. The flat membrane module according to any one of claims 1 to 3, wherein
the flat membrane element further includes a buffer material disposed between the separation layer and the support layer.

5. The flat membrane module according to any one of claims 1 to 4, wherein
the separation layer includes a first separation layer and a second separation layer, and
the support layer is disposed between the first separation layer and the second separation layer.

6. The flat membrane module according to any one of claims 1 to 5, wherein
a thickness of at least a portion of a peripheral edge of the plurality of flat membrane elements that faces the inflow hole of the housing in the first direction when the element stack is accommodated in the internal space of the housing is smaller than a thickness of a central portion of the plurality of flat membrane elements.

7. The flat membrane module according to claim 6, wherein
the peripheral edge of the plurality of flat membrane elements is formed with a thermal fusion member.

8. The flat membrane module according to any one of claims 1 to 7, wherein
the element stack includes a spacer which is disposed between two flat membrane elements adjacent to each other among the plurality of flat membrane elements so as to maintain the introduction gap and form a flow channel which allows the fluid that contains the fine particles to pass therethrough.

9. The flat membrane module according to any one of claims 1 to 8, comprising:
a drift prevention member which is disposed in a gap between an inner wall of the internal space and the element stack accommodated in the internal space to prevent the fluid that contains the fine particles from passing through the gap between the inner wall and the element stack accommodated in the internal space.

10. The flat membrane module according to any one of claims 1 to 9, wherein
the plurality of flat membrane elements includes a first flat membrane element and a second flat membrane element,
in a cross section perpendicular to the second direction, the first flat membrane element is disposed closest to the inner wall of the internal space in the first direction, and the second flat membrane element is disposed farther away from the inner wall than the first flat membrane element in the first direction,
a first width of the first flat membrane element in the third direction is smaller than a second width of the second flat membrane element in the third direction.

11. The flat membrane module according to any one of claims 1 to 10, wherein
the housing includes an outflow hole through which the fluid that contains the fine particles, which has been introduced into the introduction gap in the element stack accommodated in the internal space but has not passed through the inside of the flat membrane element, is discharged from the internal space to the outside, and a recovery hole through which the filtered fluid is discharged from the internal space to the outside.

12. The flat membrane module according to claim 11, wherein
an inflow-outflow distance, which is a distance between the inflow hole and the outflow hole in the axial direction of the housing, is 0.6 times or more and 1.0 times or less a length of the housing in the axial direction.

13. The flat membrane module according to claim 11 or claim 12, wherein
when the element stack is accommodated in the internal space of the housing, the inflow hole faces a plane perpendicular to the third direction in the element stack,
the outflow hole includes a first outflow hole and a second outflow hole,
the recovery hole includes a first recovery hole and a second recovery hole,
the inflow hole is disposed at a position between the first outflow hole and the second outflow hole in the axial direction of the housing,
the first recovery hole is disposed on the same side as the first outflow hole in the axial direction of the housing as viewed from the inflow hole,
the second recovery hole is disposed on the same side as the second outflow hole in the axial direction of the housing as viewed from the inflow hole,
a first inflow-outflow distance, which is a distance from the inflow hole to the first outflow hole in the axial direction of the housing, is smaller than a first inflow-recovery distance, which is a distance from the inflow hole to the first recovery hole in the axial direction of the housing, and
a second inflow-outflow distance, which is a distance from the inflow hole to the second outflow hole in the axial direction of the housing, is smaller than a second inflow-recovery distance, which is a distance from the inflow hole to the second recovery hole in the axial direction of the housing.
